# EUROPEAN PATENT APPLICATION

(11) **EP 2 902 510 A1**
(43) Date of publication of application: **05.08.2015**
(21) Application number: 14153045.1
(22) Date of filing: 29.01.2014
(51) Int. Cl.: C22B 7/02, C22B 19/20

(54) **A new method for leaching of electric arc furnace dust (EAFD) with sulphuric acid**

(71) Applicant: Canbekte, Hüsnü Sinan, 34430 Istanbul (TR)
(72) Inventor: Canbekte, Zekeriya, 34430 ISTANBUL (TR)
(74) Representative: Lemcke, Brommer & Partner Patentanwälte Partnerschaft mbB

(57) **Abstract**

We propose a method for leaching zinc from oxidic zinc bearing materials, characterized in that a metal containing material is brought into contact with sulphuric acid in two successive leach stages, namely a first leach and a second leach, and iron oxide is removed from the leach solution separetely from a respective leach residue of the leach stages. This method is highly efficient and can produce iron for possible further use.

## Description

### Technical field of the invention

The present invention relates to a process for the leaching of electric arc furnace dust (EAFD) with sulphuric acid for zinc recovery.

### Background of the invention

Leaching of oxidic zinc bearing materials with sulphuric acid is widely applied process in industry. Normally, these processes are carried out in tanks at elevated temperatures of 60-95 °C for periods of up to 6-8 hours in a couple of stages such as neutral leach, hot acid leach and/or ferrite leach. Some of the zinc contained in the oxidic zinc bearing materials is generally associated with ferrites, which requires ferrite leaching. Before the electrolytic recovery of zinc, any iron dissolved in the leach solution is generally removed as jarosite or goethite.

Patent application US 2013/0025412 A1 'Method for leaching zinc from a zinc ore' describes a process for leaching zinc from a zinc-bearing carbonate ore, comprising the steps of: subjecting the zinc-bearing carbonate ore to elevated temperatures of between about 300 °C and about 900 °C, thereby producing a roasted ore; subjecting the roasted ore to an aqueous acid or alkali leach, thereby producing an aqueous zinc solution; and subjecting the aqueous zinc solution to a zinc recovery step.

US Patent 7,517,383 B2 'Method for recovery of zinc by countercurrent leaching' describes a process for leaching zinc-containing materials in connection with the electrolytic recovery of zinc. According to this method, the feed materials, i.e. zinc calcine and zinc sulphide, are leached in three stages, in which the sulphuric acid content of the stages rises in accordance with the direction in which the solids are moving. The solids and solution formed in the leaching stages are routed throughout the process countercurrently in relation to each other.

US Patent 5,585,079 A 'Method for leaching material containing zinc oxide and zinc silicate' describes a process for recovering zinc from a zinc oxide bearing material containing silicates. According to the method, the leaching of zinc compounds is carried out in circumstances where the silicates remain undissolved and consequently do not cause filtering problems. The silicate bearing residue is treated in a Waelz process, so that the major part of the silicic acid contained in the silicates is combined in the iron silicate slag formed in the Waelz process, and the zinc is returned into leaching mainly in oxidic form.

Document WO 2005/085483 A1 describes a process, whereby all types of metals including precious metals can be leached or dissolved from different metal containing materials such as soil and crushed rock by exposing the material to a combination of three different chemicals of a metal leachant, which preferably comprises urea, a pH-adjuster preferably hydrolic acid, sulphuric acid or sodium sulphate to lower the pH to a value below 3.5, and an oxidizer, preferably ferric chloride, at low temperatures.

### Summary of the invention

The object of the invention is to provide a method for efficient recovery of zinc from oxidic zinc bearing materials including washed, halide-free electric arc furnace dust, where leaching in sulphuric acid is completed in relatively short time and where iron is precipitated separately, which iron may possibly be used.

The object in achieved by means of a method according to claim 1, i.e., a method for leaching zinc from oxidic zinc bearing materials, characterized in that a metal containing material is brought into contact with sulphuric acid in two successive leach stages, namely a first leach and a second leach, and iron oxide is removed from the leach solution separetely from a respective leach residue of the leach stages.

Advantageous further embodiments of the method are defined in the dependent claims.

During the work leading to the present invention, it was found possible to leach or dissolve metals that are soluble in sulphuric acid from different oxidic zinc bearing materials such as ores, residues, dusts and concentrates in about 2 hours.

The leachate solution containing dissolved metals can be treated to recover iron, and the remaining iron-free solution can be treated to recover zinc electrolytically.

The advantages with the method according to the invention is that the method can be performed at atmospheric pressure and at temperatures varying from ambient to boiling levels, that no gases are emitted and that due to relatively short leaching time, simple and inexpensive equipment can be used to perform the method. Furthermore, iron can be removed separately. Additionally, the amount of residue containing mainly silica, carbon, lead sulphate and calcium sulphate with some silver left after leaching is reduced in amount, which can be treated further in a lead refinery for recovery of lead and silver.

Thus, the present invention relates to a process involving leaching of oxidic zinc bearing materials, with separate removal of iron.

The characterizing features of the invention will be evident from the following description and the appended claims.

### Detailed description of the invention

The present invention relates to a process for dissolving metals, e.g. for leaching of zinc, and separate removal of iron from different oxidic zinc bearing materials which are, for example, zinc bearing wastes and residues, ores and concentrates from mining operations and from processing of ores. The purpose for dissolving the metals from the metal containing materials is the extraction of metals and their compounds for marketing reasons.

The term 'metal' used herein and in the appended claims encompasses zinc and all other metals that are normally soluble in sulphuric acid and which are associated with iron in a ferrite bond.

The invention being defined by the appended claims, any combination of the following method steps may be used to realize an embodiment thereof. Advantageously, all of the following steps are realized successively.
a) Oxidic zinc bearing materials are leached in a dilute sulphuric acid solution at pH 2.2-2.3 for about one hour (First Leach). During the leaching, the temperature is 80-95 °C, and the slurry is continously agitated.
b) Following the separation of residue by conventional methods, i.e. thickening and/or filtration, the leach residue is sent to hot acid leaching (Second Leach) while the solution is treated further to separate iron.
c) The leach residue from the first leach stage containing undissolved zinc is leached further with sulphuric acid at pH 0-0.5 for about one hour at a temperature of 85-95 °C.
d) Following the separation of residue by conventional methods, i.e. thickening and/or filtration, the leach residue from the second leach is sent to lead refinery for lead and silver recovery while the solution is sent to the first leach stage.
e) Before zinc electrolysis, iron is removed from the solution. For iron removal, the pH of the leach solution is adjusted to a pH of 2.5-3.0 by treating the solution with separately prepared limestone emulsion. The slurry is continously agitated, and the temperature is kept at around 85-90 °C.
f) The residue obtained after pH adjustment containing mainly iron oxide mixed with calcium sulphate is discarded.
g) The solution obtained after separation of iron oxide/calcium sulphate residue is treated further to remove any trace of iron. To do this, the solution pH is increased to pH 4.5 with limestone emulsion and then is reduced to 3.2 with Hydrogen peroxide to ensure that any iron remaining in the solution is converted from ferrous state to ferric state.
h) The pH of the solution is then increased to pH 4.5 with limestome emulsion.
i) Following filtration, the residue containing mainly calcium, iron, aluminium and chromium is discarded.
j) The solution then goes to a manganese removal stage where ammonium persulphate (NH₄)₂S₂O₈) is added in stoichiometric amount to the solution at 85 °C minimum, and then the solution is filtered to remove manganese dioxide residue.
k) After manganese removal, the solution containing zinc and other metals such as copper, nickel, cobalt and cadmium is purified in order to remove impurities other than zinc from the solution by conventional methods.
l) The purified solution is electrolyzed to recover zinc. The barren solution is then returned to the process.

Practically, the method can be performed in vessels made from stainless steels or mild steel or concrete tanks which will be lined with acid resistant bricks.

The leaching time, while depending on the type of metals and metal containing material, is relatively short compared with other leaching techniques. Normally, the total leaching time required is about two hours.

The invention will now be further explained by way of example. The example is only intended to illustrate the invention and should in no way be considered to limit the scope thereof.

### Non-limiting Example

The method and the solution according to the invention was used to leach metals from an EAFD (electric arc furnace dust) sample.
1. 100 gr of a prewashed EAFD sample was subjected to sulphuric acid leaching (first leach). The leaching was conducted at atmospheric pressure at an elevated temperature of 95 °C for 1 hour. The solid to liquid ratio was 1/3. The pH was 2.2-2.3.
2. The leach slurry was filtered.
3. The residue was subjected to sulphuric acid leaching (second leach) at atmospheric pressure at an elevated temperature of 95 °C for 1 hour. The solid to liquid ratio was 1/3. The pH was 0-0.5.
4. The slurry from the second leach was filtered and the residue was analysed. The filtrate was used in the first leach stage in step 1 above.
5. The filtrate pH from the first leach was then adjusted to pH 2.8 with limestone emulsion at a temperature of 90 °C while stirring.
6. The slurry was then filtered, the residue was discarded.
7. The filtrate pH was then first adjusted to pH 4.5 with limestone emulsion and then to pH 3.25 with hydrogen peroxide and then again to pH 4.5 with limestone emulsion.
8. The slurry was filtered again and the residue was discarded.
9. Ammonium persulphate was added to the filtrate with pH 4.5 from step 8 above at a temperature of minimum 85 °C, and then the slurry was filtered to remove manganese dioxide in the filter residue. The solution was analysed for manganese and iron and they were found to be less than 1 ppm.

The result of the above example is shown in the following table:

**Table: Analysis of prewashed EAFD sample and leach residue**

| | Washed EAFD | Leach residue | Recovery |
|---|---|---|---|
| **Wt (g)** | 100 | 15,42 | |
| **Fe(%)** | 23,94 | 0,28 | 99,82% |
| **Mg(%)** | 2,89 | | |
| **Mn(%)** | 1,71 | | |
| **Pb(%)** | 2,93 | 19,00 | |
| **Si(%)** | 1,55 | 10,05 | |
| **Zn(%)** | 25,67 | 0,91 | 99,45% |
| **Ag ppm** | 92 | 600 | |

## Claims

1. A method for leaching zinc from oxidic zinc bearing materials, **characterized in that** a metal containing material is brought into contact with sulphuric acid in two successive leach stages, namely a first leach and a second leach, and iron oxide is removed from the leach solution separetely from a respective leach residue of the leach stages.

2. The method according to claim 1, wherein during said first leach oxidic zinc bearing material is leached with sulphuric acid at a pH of 2.2-2.3 at atmospheric pressure and at an elevated temperature of 80-95 °C.

3. The method according to claim 1 or 2, wherein the leach residue received after the separation of solids and liquids from the first leach is subjected to hot acid leaching during said second leach, the second leach preferentially comprising leaching with sulphuric acid at a pH of 0-0.5 at atmospheric pressure and at an elevated temperature of 80-95 °C.

4. The method according to any one of claims 1 to 3, wherein a total leaching time is about two hours and wherein soluble metal recoveries are over 95 %.

5. The method according to any one of claims 1 to 4, wherein iron oxide is removed from the leach solution at about pH 2.8 and at boiling temperature.

6. The method according to any one of claims 1 to 5, wherein limestone and/or lime emulsion is used for increasing the pH of the leach solution, where a pH increase is required.

7. The method according to any one of claims 1 to 6, wherein any ferrous iron remaining in the leach solution is converted to ferric iron by reducing the pH of the leach solution to about 3.25 with hydrogen peroxide.

8. The method according to any one of claims 1 to 7, wherein no additional pressure is required.

9. The method according to any one of claims 1 to 8, wherein said metal containing material is provided in finely divided form.

10. The method according to any one of claims 1 to 9, wherein the zinc in the oxidic zinc bearing material is in oxide form and the oxidic zinc bearing material includes ores, concentrates, residues, tailings and electric arc furnace dusts, which are produced from mining operations, concentrators, smelters, refineries and/or steel plants.

11. The method according to any one of claims 1 to 10, wherein manganese is removed from the leach solution with ammonium persulphide at minimum 85 °C temperature as manganese dioxide residue.

12. The method according to any one of claims 1 to 11, wherein the method is applied to oxidic nickel and copper ores, concentrates and residues etc.
